# EUROPEAN PATENT SPECIFICATION

(11) **EP 3 230 566 B1**
(45) Date of publication and mention of the grant of the patent: **21.11.2018**
(21) Application number: 15828754.0
(22) Date of filing: 09.12.2015
(51) Int. Cl.: F01N 9/00, F01N 3/023

(54) **METHOD AND SYSTEM FOR MANAGING A REGENERATION OF A PARTICULATE FILTER**
VERFAHREN UND VORRICHTUNG ZUM REGENERIEREN EINES PARTIKELFILTERS
PROCÉDÉ ET DISPOSITIF DE RÉGÉNERATION D'UN FILTRE À PARTICULES

(30) Priority: 09.12.2014 IT TO20141017
(43) Date of publication of application: 18.10.2017
(73) Proprietor: FPT Industrial S.p.A., 10156 Torino (IT)
(72) Inventor: CERCIELLO, Giovanni, 10139 Torino (IT); VITIELLO, Angela, 10139 Torino (IT)
(74) Representative: Fiume, Orazio
(86) International application number: PCT/IB2015/059462
(87) International publication number: WO 2016/092481

(56) References cited:
- EP-A1- 1 203 869
- WO-A1-2014/191008
- DE-A1-102011 105 589
- FR-A1- 2 811 370
- FR-A1- 2 876 737

## Description

### Field of the invention

The present invention relates to the field of internal combustion engines, and in particular to the management of those components involved in the abatement of pollutants.

More particularly, the invention concerns a method and system for managing a regeneration of a particulate filter.

### State of the art

DPF filters have been long employed to restrain the particulates produced by the combustion of internal combustion engines, especially diesel engines.

Such filters are called closed filters referring to the shape of the channels formed in them.

These many channels are made of porous ceramic material retaining the particulate contained in the gas passing through them.

A filter clogging is detected by measuring the pressure upstream the filter (backpressure) or by measuring a differential pressure upstream and downstream the filter.

In relation to the conditions of use of the vehicle, the particulate filter may be subject to more or less frequent regeneration cycles for burning the accumulated particulate, thus clearing the filter.

Such regeneration cycles are carried out by injecting fuel into the combustion chambers during the exhaust phase in order to enter the unburnt fuel directly into the device for the after-treatment of exhaust gases (ATS) including a particulate filter. This strategy is called post-injection strategy. On the one hand, such post-injections induce high temperatures in ATS, but on the other hand they tend to deteriorate the lubricating oil of the internal combustion engine.

In particular, the fuel injected in large amounts extrudes by mixing with the engine oil. Such mixing affects the internal combustion engine, that may be damaged, and affects the fuel consumption as well.

For ease of implementation, the duration of a regeneration process is fixed and predefined taking into account possible environmental conditions that may adversely affect a perfect regeneration.

FR2876737 discloses a method for managing a regeneration of a particulate filter whose features are in the preamble of claim 1.

### Summary of the invention

A first object of the present invention is limiting the negative effects of the regeneration cycles.

The basic idea of the present invention is limiting the regeneration cycles not by intervening on their frequency, but on the duration of each regeneration procedure.

More particularly, the basic idea of the present invention is forcing the interruption of the regeneration process as soon as the predefined DPF operating conditions are detected during a regeneration process.

The present invention provides a method for managing a regeneration of a particulate filter according to claim 1 and a corresponding system according to claim 6.

The interruption of a regeneration process is based on monitoring the gas temperature at the DPF outlet.

Preferably, when a difference between a DPF outlet temperature and a calculated theoretical temperature is lower than a first threshold, the regeneration process is interrupted. For convenience, this comparison is called "comparative strategy".

The calculated theoretical temperature at the DPF outlet is preferably estimated by means of an algorithm based on the DPF geometrical characteristics, the room temperature, the DPF inlet temperature, the revolutions/load-related engine status and the amount of post-injected fuel, deliberately ignoring the exothermic effects of the particulate combustion. During a regeneration process, the oxidation of the particulate contributes to a raising of the DPF outlet temperature. Therefore, when the DPF outlet temperature is close to said calculated theoretical value, this means that there is no more particulate to burn, or in any case that the particulate residue is negligible.

Alternatively, when the absolute value of a derivative of the DPF outlet temperature is lower than a second calculated threshold, the regeneration process is interrupted. For convenience, this strategy is called "differential".

According to a preferred variant of the invention, in parallel to the monitoring of the DPF outlet temperature, during a regeneration process, a monitoring of the differential pressure between the DPF inlet and the DPF outlet is carried out over time, and when the absolute value of a time derivative of said differential pressure is lower than a third predefined threshold, the regeneration process is interrupted, and the temperature monitoring is interrupted as well.

Preferably, when the DPF outlet temperature monitoring determines an interruption of a regeneration process, it also determines the interruption of the monitoring of the derivative of the differential pressure.

According to the present description, the DPF inlet and the DPF outlet are marked by the direction of flow of exhaust gas, and the temperatures at the DPF inlet and at the DPF outlet implicitly refer to the circulating flow of exhaust gas.

Advantageously, the present invention allows limiting the dilution of the oil produced by regeneration, thus extending the engine oil change interval, and reducing the impact of the regeneration on fuel consumption.

Another object of the present invention is a system for managing a regeneration of a particulate filter and an internal combustion engine comprising the aforesaid managing system.

The claims describe preferred variants of the invention forming an integral part of the present description.

### Brief description of the figures

Further purposes and advantages of the present invention will become clear from the following detailed description of an embodiment thereof (and of its variants) and from the annexed drawings, given for merely illustrative and not limitative purposes, in which:
Figure 1 shows a block diagram defining a preferred implementation of a first preferred variant of the method object of the present invention,
Figure 2 shows a block diagram defining a preferred implementation of a process according to a second preferred variant, wherein this process is carried out in parallel to the block diagram of Figure 1,

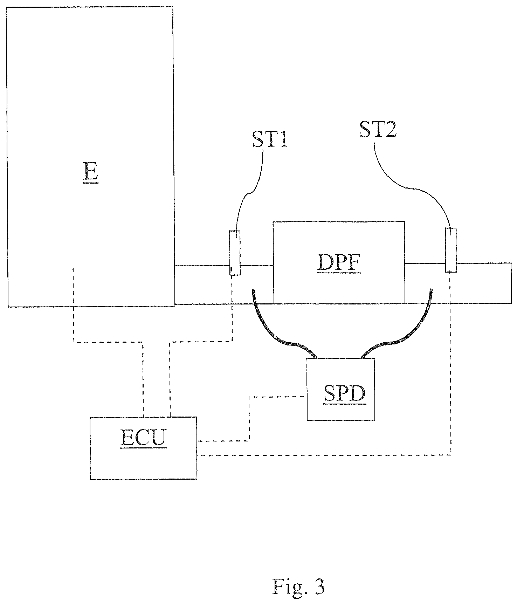

Figure 3 shows a schematic example of an internal combustion engine equipped with a particulate filter, sensors and processing means to carry out one of the block diagrams of the previous figures.

The same numbers and the same reference letters in the figures identify the same elements or components.

In the present description, the term "second" component does not imply the presence of a "first" component. These terms are in fact used only for clarity and are not intended as limiting.

### Detailed description of the embodiments

It is now described the method of the invention, which is automatically activated when a process for regenerating a vehicle DPF starts. After its activation, the method runs continuously and stops when the regeneration process is interrupted by the method.

According to the method of the present invention, the temperature is measured at the DPF outlet and is compared with a calculated theoretical value, thus obtaining a temperature difference. When this temperature difference is lower than a first predefined threshold, the regeneration process is interrupted.

In order to allow a stabilization of the regeneration process, it is preferable that the temperature monitoring is carried out after a predefined time interval, starting from the beginning of the regeneration process.

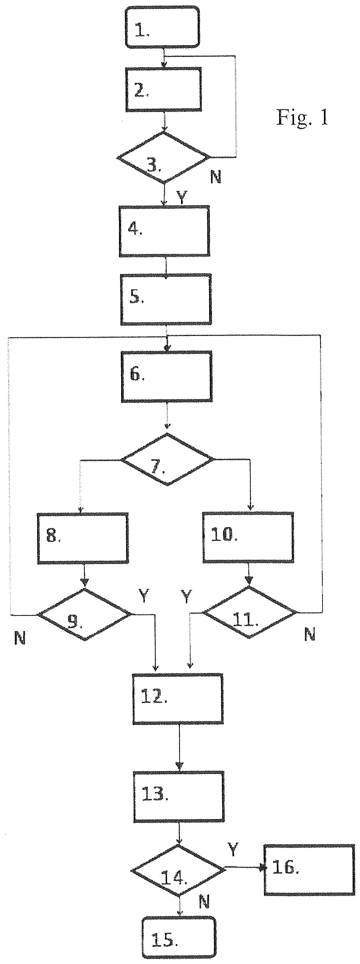

Figure 1 shows a preferred implementation of a first variant of the invention by means of a flow diagram containing the following steps in succession.

Steps 1-7 are always carried out, whereas the right or the left branches are carried out in relation to a flag which can be set during the calibration of the ECU engine control unit which usually controls the processes related to the internal combustion engine and to the relative ATS, including the DPF regeneration process.

With reference to Figure 1, then:
Step 1: detecting the start of a DPF regeneration process,
Step 2: measuring the DPF inlet temperature (TinDPF),
Step 3: if the DPF inlet temperature is higher than a fourth predefined threshold (TinDPF> Th4?), then
Step 4: waiting for a time interval t1; otherwise, if the DPF inlet temperature is NOT higher than said fourth predefined threshold, go back to step 2, then
Step 5: estimating the DPF outlet temperature in the absence of particulate, thus obtaining said calculated theoretical temperature value (ToutDPFcalc),
Step 6: measuring the DPF outlet temperature (ToutDPFmis) thus obtaining a relative value,
Step 7: checking the strategy to be implemented, whether comparative or differential: if it is comparative, go to step 8, otherwise go to step 10:
Step 8: calculating a difference between said calculated theoretical temperature and said DPF outlet temperature (ToutDPFmis - ToutDPFcalc),
Step 9: checking whether said difference is below a first threshold (ToutDPFmis - ToutDPFcalc <Th1?); if it is not below said second threshold, go back to Step 6, if it is below said first threshold, go to step 12;
   if, however, the strategy is differential, then
Step 10: calculating the absolute value of the derivative of the DPF outlet temperature over time (DToutDPFmis), and
Step 11: checking whether said absolute value of the derivative of the DPF outlet temperature is below said second predefined threshold (DToutDPFmis <Th3?), then
Step 12: waiting for a time interval t2, then
Step 13: acquiring the error status of the temperature sensors,
Step 14: checking whether there are errors on the temperature sensors, if there are no errors then
Step 15: interrupting the regeneration and interrupting the present method, but if there are errors of the temperature sensors, then
Step 16: interrupting the present method without interfering with the regeneration process.

If any error is detected on the sensors, this does not mean that the regeneration goes on forever, but rather that it remains under control of other processes. To this regard, it is also clear that the concept of interruption is absolute if compared with any further parallel process.

For example, an algorithm can estimate the particulate oxidation time based on DPF inlet temperature, engine status, post-injected fuel and room temperature, and can maintain the regeneration process, irrespective of the DPF outlet temperature. Otherwise, a timer stops the regeneration process after its activation, regardless of the operating conditions.

It is immediately clear that the algorithm for estimating the theoretical value of temperature, regardless of the estimated particulate accumulation and of the relative oxidative contribution, appears to be more stable and reliable than those processes which are instead based on this estimated particulate accumulation.

It must further be clear that the two right (steps 10 and 11) and left (steps 8 and 9) branches can also be carried out in parallel, each of them being independently able to actually carry out step 15.

According to a preferred variant of the invention, besides the aforesaid method, the differential pressure generated by the particulate accumulated in the DPF is monitored in parallel. When the absolute value of the derivative of this differential pressure is lower than a third calculated threshold Th3, the regeneration process is interrupted, and also the process based on monitoring the DPF outlet temperature according to the steps 1-16 is interrupted.

Conversely, when the monitoring process based on the DPF outlet temperature determines the interruption of the DPF regeneration process, also the process based on the differential pressure monitoring is interrupted.

In order to stabilize the regeneration process, it is preferable that the monitoring of the differential pressure is carried out after a predefined time interval, starting from the beginning of the regeneration process.

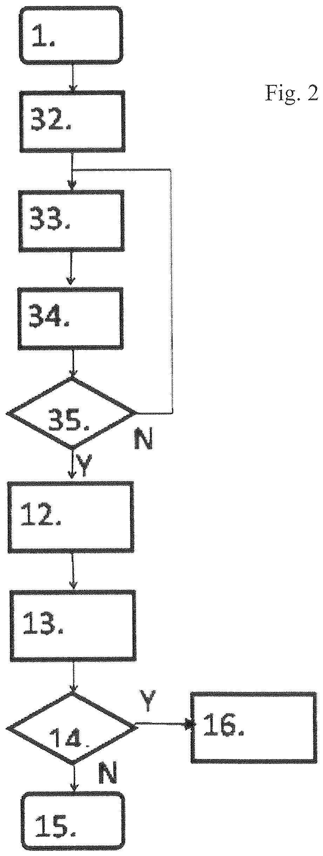

With reference to Figure 2:
Step 1: detecting the start of a DPF regeneration process,
Step 32: waiting for a time t1,
Step 33: acquiring the signal of a DPF exhaust flow resistance (FlowRes), namely of said value of differential pressure between the DPF inlet and the DPF outlet,
Step 34: calculating the absolute value (DFlowRes) of the time derivative of said signal of a DPF exhaust flow resistance (DResflow),
Step 35: checking whether an absolute value of said derivative value is below said third predefined threshold (DFlowRes <Th3?); if not (N), go back to Step 33, while if yes (Y) go to
Step 12: waiting for a time interval t2, then
Step 13: acquiring the error status of the temperature sensors,
Step 14: checking whether there are errors on the temperature sensors, if there are no errors then
Step 15: interrupting the regeneration and interrupting this method, but if there are errors on the temperature sensors, then
Step 16: interrupting this method without interfering with the regeneration process.

It is immediately clear that the steps 1 and 12-16 are numbered and corresponding to those of figure 1, precisely in view of the fact that the two methods are preferably carried out in parallel, sharing some steps.

The aforesaid differential pressure is preferably measured by a known sensor.

The errors on the temperature sensors, just like those on the pressure sensors, are generally detected by processes generally implemented in the engine control units.

Therefore, the step of storing in a database of the engine control unit the presence of errors on the sensors is already known.

An internal combustion engine E, preferably a diesel, comprises a post-treatment device of the exhaust gas ATS comprising a filter DPF.

It includes a temperature sensor at the inlet ST1 and a temperature sensor at the outlet ST2. It also includes a differential pressure sensor SPD. Said sensors are connected with the processing unit ECU which supervises the operation of the internal combustion engine and of the ATS.

The present invention can be advantageously implemented by a computer program that comprises coding means for carrying out one or more steps of the method when this program is run on a computer. Therefore, it is intended that the scope of protection extends to said computer program and furthermore to computer-readable media that comprise a recorded message, said computer-readable media comprising program coding means for carrying out one or more steps of the method when said program is run on a computer.

Various embodiments of the described non-limiting example are possible without departing from the scope of protection of the present invention, comprising all the equivalent embodiments for a person skilled in the art.

From the above description, the person skilled in the art is able to implement the object of the invention without introducing any further structural detail. The elements and features shown in the various preferred embodiments can be combined without leaving the scope of protection of the present application. All the features described in the description of the state of the art, unless specifically challenged or excluded in the detailed description, can be considered in combination with the characteristics of the variants described in the following detailed description, thus forming an integral part of the present invention. The individual characteristics of each preferred variant or drawing, if not present in the independent claims, are non-essential and, therefore, can be individually combined with other described variants.

## Claims

1. Method for managing a regeneration of a particulate filter (DPF), the particulate filter comprising an inlet and an outlet, the method comprising a step of monitoring a temperature measured at the outlet of the particulate filter during a regeneration process of the particulate filter and a step of interrupting said regeneration process based on a function of said measured temperature, the method being **characterized in** comprising the following preliminary steps:
- measuring a DPF inlet temperature,
- estimating a theoretical temperature value at the DPF outlet based on at least
• environmental parameters,
• operating parameters of a related internal combustion engine,
• said DPF inlet temperature,
wherein said estimation step ignores any oxidative contribution of any particulate accumulated in the particulate filter, and wherein said function comprises calculating a difference (ToutDPFmis - ToutDPFcalc) between said theoretical temperature value and said temperature measured at the DPF outlet, and wherein said step of interrupting said regeneration process is implemented when said difference is below a first predefined threshold (ToutDPFmis - ToutDPFcalc < Th1).

2. Method according to claim 1, wherein said function further comprises calculating an absolute value of a time derivative (DToutDPFmis) of said DPF outlet temperature, and wherein said step of interrupting said regeneration process is implemented when said absolute value of the time derivative is below a second predefined threshold (DToutDPFmis < Th2).

3. Method according to claim 2 comprising the following steps:
(Step 1) detecting the start of a regeneration process of the particulate filter (DPF),
(Step 2) measuring the DPF inlet temperature (TinDPF),
(Step 3) if the DPF inlet temperature is higher than a fourth predefined threshold (TinDPF > Th4?), then
(Step 4) waiting for a first time interval (t1), otherwise if the DPF inlet temperature is NOT higher than said fourth predefined threshold, go back to step 2, then
(Step 5) estimating the DPF outlet temperature ignoring any contribution of any particulate, thus obtaining said calculated theoretical temperature value (ToutDPFcalc),
(Step 6) measuring the DPF outlet temperature (ToutDPFmis), thus obtaining a relative value,
(Step 7) checking the strategy to be implemented, whether comparative or differential: if it is comparative, go to step 8, otherwise go to step 10:
(Step 8) calculating a difference between said calculated theoretical temperature value and said DPF outlet temperature (ToutDPFmis - ToutDPFcalc),
(Step 9) checking whether said difference is below a first threshold (ToutDPFmis - ToutDPFcalc<Th1?); if it is not below said second threshold, go back to step 6, if it is below said first threshold, go to step 12;
if, on the other hand, the strategy is differential, then
(Step 10) calculating the absolute value of a temperature derivative at the DPF outlet over time (DToutDPFmis), and
(Step 11) checking whether the absolute value of said temperature derivative at the DPF outlet is below said second predefined threshold (DToutDPFmis<Th3?), then (Step 12) waiting for a second time interval (t2), then
(Step 13) acquiring the error status of the temperature sensors,
(Step 14) checking whether there are errors on the temperature sensors, if there are no errors then
(Step 15) interrupting the regeneration process and interrupting the present method, if on the other hand there are errors on the temperature sensors,
(Step 16) interrupting the present method without interfering with the regeneration process.

4. Method according to any one of the preceding claims, further comprising the following steps:
- acquiring a differential pressure (FlowRes) between the DPF inlet and the DPF outlet,
- calculating an absolute value of a time derivative (DFlowRes) of said differential pressure, and
- interrupting said regeneration process when the absolute value of said time derivative (DFlowRes) of said differential pressure is below a third threshold (DFlowRes < Th3).

5. Method according to claim 4, comprising the following steps:
(Step 1) detecting the start of a regeneration process of the particulate filter,
(Step 32) waiting for a first time interval (t1), then
(Step 33) acquiring the signal of a DPF exhaust flow resistance (FlowRes), then
(Step 34) calculating the absolute value (DFlowRes) of the time derivative of said exhaust flow resistance signal (DResflow), then
(Step 35) checking whether an absolute value of said derivative value is below said third predefined threshold (DFlowRes < Th3?), if not (N) go back to step 33, while if yes (Y) go to
(Step 12) waiting for a second time interval (t2), then
(Step 13) acquiring the error status of the temperature sensors,
(Step 14) checking whether there are errors on the temperature sensors, if there are no errors, then
(Step 15) interrupting the regeneration and interrupting the present method, if on the other hand there are errors on the temperature sensors, then (Step 16) interrupting the present method without interfering with the regeneration process.

6. System for managing a regeneration of a particulate filter comprising means for monitoring a temperature measured at the DPF outlet during a DPF regeneration process and means for interrupting said regeneration process based on a function of said measured temperature, wherein said interrupting means are configured to carry out all the steps of any one of the preceding claims from 1 to 5.

7. System according to claim 6, further comprising means for acquiring a differential pressure between the PDF inlet and the PDF outlet, and wherein said interrupting means consist of a control unit of an internal combustion engine.

8. Internal combustion engine comprising a device for treating exhaust gas (ATS) comprising a particulate filter (DPF) and **characterised in that** it comprises a system for managing a regeneration of the particulate filter according to claims 6 or 7.

## Patentansprüche

1. Verfahren zum Steuern einer Regeneration eines Teilchenfilters (DPF), wobei das Teilchenfilter einen Einlass und eine Auslass hat, wobei das Verfahren einen Schritt des Überwachens einer Temperatur umfasst, die am Auslass des Teilchenfilters während eines Regenerationsprozesses des Teilchenfilters gemessen wird, und einen Schritt des Unterbrechens des Regenerationsprozesses auf der Basis einer Funktion der gemessenen Temperatur, wobei das Verfahren **dadurch gekennzeichnet ist, dass** es die folgenden vorbereitenden Schritte umfasst:
- Messen einer DPF-Einlasstemperatur,
- Abschätzen eines theoretischen Temperaturwertes am DPF-Auslass auf der Basis zumindest von
- Umweltparametern,
- Betriebsparametern einer entsprechenden Verbrennungskraftmaschine,
- der DPF-Einlasstemperatur.
wobei der Schätzschritt jeglichen oxidativen Beitrag von Teilchen ignoriert, die im Teilchenfilter angesammelt sind, und wobei die Funktion das Berechnen einer Differenz (ToutDPFmis - ToutDPFcalc) zwischen dem theoretischen Temperaturwert und der Temperatur umfasst, die am DPF-Auslass gemessen wird, und wobei der Schritt des Unterbrechens des Regenerationsprozesses realisiert wird, wenn die Differenz unterhalb eines ersten vorgegebenen Schwellwertes (ToutDPFmis - ToutDPFcalc < Th1) ist.

2. Verfahren nach Anspruch 1, wobei die Funktion ferner das Berechnen eines Absolutwertes einer Zeitableitung (DToutDPFmis) der DPF-Auslasstemperatur umfasst, und wobei der Schritt des Unterbrechens des Regenerationsprozesses realisiert wird, wenn der Absolutwert der Zeitableitung unterhalb eines zweiten vorgegebenen Schwellwertes (DToutDPFmis < Th2) liegt.

3. Verfahren nach Anspruch 2, das ferner die folgenden Schritte umfasst:
(Schritt 1) Feststellen das Starts eines Regenerationsprozesses des Teilchenfilters (DPF),
(Schritt 2) Messen der DPF-Einlasstemperatur (TinDPF),
(Schritt 3) Wenn die DPF-Einlass Temperatur höher als ein vierter vorgegebener Schwellwert (TinDPF > Th4?) ist, dann
(Schritt 4) Warten auf ein erstes Zeitintervall (t1), andernfalls wenn die DPF-Einlasstemperatur NICHT höher als der vierte vorgegebene Schwellwert ist, zurückgehen zu Schritt 2, dann
(Schritt 5) Abschätzen der DPF-Auslasstemperatur, wobei jeder Beitrag von Teilchen ignoriert wird, daher Erhalten des berechneten theoretischen Temperaturwertes (ToutDPFcalc),
(Schritt 6) Messen der DPF-Auslasstemperatur (ToutDPFmis), dadurch Erhalten eines Relativwertes,
(Schritt 7) Kontrollieren der zu implementierenden Strategie, ob vergleichend oder differenziert: Wenn sie vergleichend ist, gehe zu Schritt 8, andernfalls gehe zu Schritt 10;
(Schritt 8) Berechnen einer Differenz zwischen dem berechneten theoretischen Temperaturwert und der DPF-Auslasstemperatur (ToutDPFmis - ToutDPFcalc),
(Schritt 9) Kontrollieren, ob die Differenz unterhalb eines ersten Schwellwertes (ToutDPFmis - ToutDPFcalc<Th1?) liegt; wenn sie nicht unter dem zweiten Schwellwert liegt, gehe zurück zu Schritt 6, wenn sie unter dem ersten Schwellwert liegt, gehe zu Schritt 12; wenn andererseits die Strategie differenziell ist, dann
(Schritt 10) Berechnen des Absolutwertes einer Temperaturableitung am DPF-Auslass über der Zeit (DToutDPFmis), und
(Schritt 11) Kontrollieren, ob der Absolutwert der Temperaturableitung am DPF-Auslass unterhalb des zweiten vorgegebenen Schwellwertes (DToutDPFmis<Th3?) ist, dann
(Schritt 12) Warten auf ein zweites Zeitintervall (t2), dann
(Schritt 13) Erfassen des Fehlerstatus der Temperatursensoren,
(Schritt 14) Kontrollieren, ob es Fehler an den Temperatursensoren gibt, wenn es keine Fehler gibt, dann
(Schritt 15) Unterbrechen des Regenerationsprozesses und unterbrechen des aktuellen Verfahrens; wenn es andererseits Fehler an den Temperatursensoren gibt,
(Schritt 16) Unterbrechen des aktuellen Verfahrens, ohne den Regenerationsprozess zu stören.

4. Verfahren nach einem der vorherigen Ansprüche, das ferner die folgenden Schritte umfasst:
- Erfassen eines Differenzialdrucks (FlowRes) zwischen dem DPF-Einlass und dem DPF-Auslass,
- Berechnen eines Absolutwertes einer Zeitableitung (DFlowRes) des Differenzialdrucks, und
- Unterbrechen des Regenerationsprozesses, wenn der Absolutwert der Zeitableitung (DFlowRes) des Differenzialdrucks unterhalb eines dritten Schwellwertes (DFlowRes < Th3) liegt.

5. Verfahren nach Anspruch 4, das die folgenden Schritte umfasst:
(Schritt 1) Feststellen des Starts eines Regenerationsprozesses des Teilchenfilters,
(Schritt 32) Warten auf ein erstes Zeitintervall (t1), dann
(Schritt 33) Erfassen des Signals eines DPF-Abgasstrom-Widerstandes (FlowRes), dann
(Schritt 34) Berechnen des Absolutwertes (DFlowRes) der Zeitableitung des Abgasstrom-Widerstandssignals (DResflow), dann
(Schritt 35) Kontrollieren, ob ein Absolutwert des Ableitungswertes unterhalb des dritten vorgegebenen Schwellwertes liegt (DFlowRes < Th3?), wenn nicht (N), gehe zurück zu Schritt 33, wenn jedoch ja (Y), gehe zu (Schritt 12) Warten auf ein zweites Zeitintervall (t2), dann
(Schritt 13) Erfassen des Fehlerstatus der Temperatursensoren,
(Schritt 14) Kontrollieren, ob es Fehler an den Temperatursensoren gibt; wenn es keine Fehler gibt, dann
(Schritt 15) Unterbrechen der Regeneration und Unterbrechen des aktuellen Verfahrens; wenn es andererseits Fehler an den Temperatursensoren gibt, dann
(Schritt 16) Unterbrechen des aktuellen Verfahrens, ohne den Regenerationsprozess zu stören.

6. System zur Steuerung einer Regeneration eines Teilchenfilters, das Mittel zum Überwachen einer Temperatur umfasst, die am DPF-Auslass während eines DPF-Regenerationsprozesses gemessen wird, und Mittel zum Unterbrechen des Regenerationsprozesses auf der Basis einer Funktion der gemessenen Temperatur, wobei die Unterbrechungsmittel dafür ausgelegt sind, alle Schritte nach einem der vorherigen Ansprüche von 1 bis 5 auszuführen.

7. System nach Anspruch 6, das ferner Mittel zum Erfassen eines Differenzialdrucks zwischen dem PDF-Einlass und dem PDF-Auslass umfasst, und wobei die Unterbrechungsmittel aus einer Kontrolleinheit einer Verbrennungskraftmaschine bestehen.

8. Verbrennungskraftmaschine, die eine Vorrichtung zum Behandeln von Abgas (ATS) umfasst, die ein Teilchenfilter (DPF) enthält und **dadurch gekennzeichnet ist, dass** sie ein System zum Steuern einer Regeneration des Teilchenfilters nach den Ansprüchen 6 oder 7 umfasst.

## Revendications

1. Procédé de gestion d'une régénération d'un filtre à particules (DPF), le filtre à particules comprenant un orifice d'entrée et un orifice de sortie, le procédé comprenant une étape de surveillance d'une température mesurée au niveau de l'orifice de sortie du filtre à particules pendant un processus de régénération du filtre à particules et une étape d'interruption dudit processus de régénération d'après une fonction de ladite température mesurée, le procédé étant **caractérisé en ce qu'**il comprend les étapes préliminaires suivantes :
- la mesure d'une température d'orifice d'entrée de DPF,
- l'estimation d'une valeur de température théorique au niveau de l'orifice de sortie de DPF d'après au moins
• des paramètres environnementaux,
• des paramètres de fonctionnement d'un moteur à combustion interne lié,
• ladite température d'orifice d'entrée de DPF,
dans lequel ladite étape d'estimation ignore toute contribution oxydative de toute particule accumulée dans le filtre à particules, et dans lequel ladite fonction comprend le calcul d'une différence (ToutDPFmis - ToutDPFcalc) entre ladite valeur de température théorique et ladite température mesurée au niveau de l'orifice de sortie de DPF, et dans lequel ladite étape d'interruption dudit processus de régénération est mise en oeuvre lorsque ladite différence est inférieure à un premier seuil prédéfini (ToutDPFmis - ToutDPFcalc < Th1).

2. Procédé selon la revendication 1, dans lequel ladite fonction comprend en outre le calcul d'une valeur absolue d'une dérivée temporelle (DToutDPFmis) de ladite température d'orifice de sortie de DPF, et dans lequel ladite étape d'interruption dudit processus de régénération est mise en oeuvre lorsque ladite valeur absolue de la dérivée temporelle est inférieure à un deuxième seuil prédéfini (DToutDPFmis < Th2).

3. Procédé selon la revendication 2 comprenant les étapes suivantes :
(étape 1) la détection du démarrage d'un processus de régénération du filtre à particules (DPF),
(étape 2) la mesure de la température d'orifice d'entrée de DPF (TinDPF),
(étape 3) si la température d'orifice d'entrée de DPF est supérieure à un quatrième seuil prédéfini (TinDPF > Th4 ?), alors
(étape 4) l'attente pendant un premier intervalle de temps (t1), sinon si la température d'orifice d'entrée de DPF n'est PAS supérieure audit quatrième seuil prédéfini, retour à l'étape 2, puis
(étape 5) l'estimation de la température d'orifice de sortie de DPF en ignorant toute contribution de toute particule, obtenant ainsi ladite valeur de température théorique calculée (ToutDPFcalc),
(étape 6) la mesure de la température d'orifice de sortie de DPF (ToutDPFmis), obtenant ainsi une valeur relative,
(étape 7) la vérification de la stratégie à mettre en oeuvre, qu'elle soit comparative ou différentielle : si elle est comparative, aller à l'étape 8, sinon aller à l'étape 10 :
(étape 8) le calcul d'une différence entre ladite valeur de température théorique calculée et ladite température d'orifice de sortie de DPF (ToutDPFmis - ToutDPFcalc),
(étape 9) le fait de vérifier si ladite différence est inférieure à un premier seuil (ToutDPFmis - ToutDPFcalc < Th1 ?) ; si elle n'est pas inférieure audit deuxième seuil, aller à l'étape 6, si elle est inférieure audit premier seuil, aller à l'étape 12 ; si, en revanche, la stratégie est différentielle, alors
(étape 10) le calcul de la valeur absolue d'une dérivée de température au niveau de l'orifice de sortie de DPF dans le temps (DToutDPFmis), et
(étape 11) le fait de vérifier si la valeur absolue de ladite dérivée de température au niveau de l'orifice de sortie de DPF est inférieure audit deuxième seuil prédéfini (DToutDPFmis < Th3 ?), puis
(étape 12) l'attente pendant un second intervalle de temps (t2), puis
(étape 13) l'acquisition du statut d'erreur des capteurs de température,
(étape 14) le fait de vérifier s'il y a des erreurs sur les capteurs de température, et s'il n'y a pas d'erreurs alors
(étape 15) l'interruption du processus de régénération et l'interruption du présent procédé, si en revanche il y a des erreurs sur les capteurs de température,
(étape 16) l'interruption du présent procédé sans interférer avec le processus de régénération.

4. Procédé selon l'une quelconque des revendications précédentes, comprenant en outre les étapes suivantes :
- l'acquisition d'une pression différentielle (FlowRes) entre l'orifice d'entrée de DPF et l'orifice de sortie de DPF,
- le calcul d'une valeur absolue d'une dérivée temporelle (DFlowRes) de ladite pression différentielle, et
- l'interruption dudit processus de régénération lorsque la valeur absolue de ladite dérivée temporelle (DFlowRes) de ladite pression différentielle est inférieure à un troisième seuil (DFlowRes < Th3).

5. Procédé selon la revendication 4, comprenant les étapes suivantes :
(étape 1) la détection du démarrage d'un processus de régénération du filtre à particules,
(étape 32) l'attente pendant un premier intervalle de temps (t1), puis
(étape 33) l'acquisition du signal d'une résistance de flux d'échappement de DPF (FlowRes), puis
(étape 34) le calcul de la valeur absolue (DFlowRes) de la dérivée de temps dudit signal de résistance de flux d'échappement (DResflow), puis
(étape 35) le fait de vérifier si une valeur absolue de ladite valeur de dérivée est inférieure audit troisième seuil prédéfini (DFlowRes < Th3 ?), si ce n'est pas le cas (N) retourner à l'étape 33, tandis que si c'est le cas (Y) aller à
(étape 12) l'attente pendant un second intervalle de temps (t2), puis
(étape 13) l'acquisition du statut d'erreur des capteurs de température,
(étape 14) le fait de vérifier s'il y a des erreurs sur les capteurs de température, s'il n'y a pas d'erreurs, alors
(étape 15) l'interruption de la régénération et l'interruption du présent procédé, si en revanche il y a des erreurs sur les capteurs de température, alors
(étape 16) l'interruption du présent procédé sans interférer avec le processus de régénération.

6. Système de gestion d'une régénération d'un filtre à particules comprenant des moyens de surveillance d'une température mesurée au niveau de l'orifice de sortie de DPF pendant un processus de régénération de DPF et des moyens d'interruption dudit processus de régénération d'après une fonction de ladite température mesurée, dans lequel lesdits moyens d'interruption sont configurés pour réaliser toutes les étapes selon l'une quelconque des revendications 1 à 5 précédentes.

7. Système selon la revendication 6, comprenant en outre des moyens d'acquisition d'une pression différentielle entre l'orifice d'entrée de DPF et l'orifice de sortie de DPF, et dans lequel lesdits moyens d'interruption consistent en une unité de commande d'un moteur à combustion interne.

8. Moteur à combustion interne comprenant un dispositif de traitement de gaz d'échappement (ATS) comprenant un filtre à particules (DPF) et **caractérisé en ce qu'**il comprend un système de gestion d'une régénération du filtre à particules selon la revendication 6 ou 7.
